# EUROPÄISCHE PATENTSCHRIFT

(11) **EP 2 189 678 B1**
(45) Veröffentlichungstag und Bekanntmachung des Hinweises auf die Patenterteilung: **15.02.2012**
(21) Anmeldenummer: 09013327.3
(22) Anmeldetag: 22.10.2009
(51) Int. Cl.: F16F 13/14

(54) **Hydraulisch dämpfendes Gummi-Metalllager**
Hydraulic dampening rubber metal bearing
Palier élastique à amortissement hydraulique

(30) Priorität: 19.11.2008 DE 102008057925
(43) Veröffentlichungstag der Anmeldung: 26.05.2010
(73) Patentinhaber: Audi AG, 85045 Ingolstadt (DE)
(72) Erfinder: Unger, Wolfgang, 85080 Gaimersheim (DE); Killian, Friedrich, 85122 Hitzhofen (DE); Lacher, Claus, 86558 Hohenwart (DE)
(74) Vertreter: Asch, Konrad

(56) Entgegenhaltungen:
- EP-A1- 1 770 303
- DE-A1- 10 351 069
- JP-A- 2004 100 817

## Beschreibung

Die Erfindung betrifft ein hydraulisch dämpfendes Gummi-Metalllager, insbesondere für Radaufhängungen von Kraftfahrzeugen, gemäß dem Oberbegriff des Patentanspruches 1.

Derartige Gummi-Metalllager sind bekannt und werden vermehrt als Schwenklager zwischen Lenkern einer Radaufhängung und dem Aufbau des Kraftfahrzeuges eingesetzt. Sie müssen in begrenztem Umfang sowohl kardanische als auch rotatorische Relativbewegungen ausgleichen. Die Hauptbelastungsrichtung dieser Lager kann in Zug- oder Druckrichtung des Lenkers auftreten und erfordert demzufolge in dem Lager Anschlagkörper, die trotz einer relativ weichen, komfortablen Lagerkennung Überbelastungen im Lager abfedern.

Aus der Druckschrift JP 2004 100817 A ist ein Gummi-Metalllager gemäß dem Oberbegriff von Anspruch 1 bekannt.

Aufgabe der Erfindung ist es, ein hydraulisch dämpfendes Gummi-Metalllager mit integrierten Anschlagkörpern mit geringem Mehraufwand so weiterzubilden, dass eine verbesserte Einleitung von Kräften und Momenten von den Anschlagkörpern in den festen Lagerkern und damit in den Aufbau des Kraftfahrzeuges erzielt ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Kontaktflächen zwischen dem Lagerkern und den Anschlagkörpern sphärisch ausgebildet sind. Dadurch werden die Anschlagkräfte unabhängig von einer kardanischen oder rotatorischen Beanspruchung des Lagers mit entsprechender Verkippung oder Verdrehung des Lagerkernes relativ zu den Anschlagkörpern ideal flächig abgestützt. In den sphärischen bzw. kugeligen Kontaktflächen wirken vornehmlich nur Normalkräfte. Gleichzeitig wird eine verbesserte Führung des Lagerkernes insbesondere entlang dessen Mittellängsachse erzielt; die unerwünschte Ausgleichsbewegungen unterbindet. Außerdem sind die Anschlagkörper an Lagerhalbschalen ausgebildet, die diametral gegenüberliegend in die Außenhülse des Lagers eingesetzt sind. Dementsprechend können die sphärischen Kontaktflächen der Anschlagkörper baulich und fertigungstechnisch günstig in die Lagerkonstruktion eingebunden werden. Außerdem ist zwischen den Anschlagkörpern und den Lagerhalbschalen jeweils eine dämpfende Zwischenlage aus elastomeren Werkstoff eingesetzt, die ein weicheres Einsetzen der Lageranschläge sicherstellen und eine kraftflussoptimierte Abstützung der auftretenden Lagerkräfte ermöglichen.

Dazu wird des Weiteren vorgeschlagen, dass die Kontaktflächen des Anschlagkörpers und des sphärischen Abschnittes des Lagerkemes einen einheitlichen Krümmungsradius aufweisen, dessen Zentrum zumindest im Wesentlichen im Lagermittelpunkt liegt.

Die Zwischenlage kann in einer vereinfachten Auslegung kreissymmetrisch und parallel zur Mittellängsachse des Lagerkernes ausgebildet sein.

Alternativ und bevorzugt wird jedoch vorgeschlagen, dass die Zwischenlage kreissymmetrisch und mit V-förmig zur Mittellängsachse verlaufenden Schrägflächen ausgeführt ist. Dabei erzeugen die Reaktionskräfte in der Rückseite des Anschlagkörpers Kraftanteile, die den in der Kugelfläche des Lagerkernes wirksamen Kraftanteilen entgegenwirken. Damit heben sich die auf die Anschlagkörper wirkenden Kräfte entlang der Längsmittelachse des Lagerkernes gegenseitig auf, so dass unerwünschte Zugspannungen reduziert werden.

Abhängig von Belastungsparametern und zur Abstimmung der Lagerkennungen können die beidseitig verlaufenden Schrägflächen der Zwischenlage in einen achsparallel ausgerichteten Mittelabschnitt übergehen oder alternativ mit sphärischen Anlageflächen zu den Anschlagkörpern und den Lagerhalbschalen ausgebildet sein.

In einer weiteren vorteilhaften Ausgestaltung der Erfindung können die sphärischen Kontaktflächen am Lagerkern an Pufferelementen ausgebildet sein, die diametral gegenüberliegend an Umfangsabschnitten des Lagerkernes befestigt sind. Insbesondere können diese Pufferelemente und die Lagerkörper aus plastischem Kunststoff mit niedrigem Reibungskoeffizienten hergestellt sein. Die Pufferelemente können fertigungstechnisch günstig formschlüssig und/oder kraftschlüssig z.B. durch Kleben mit dem hülsenförmigen Lagerkern verbunden sein.

Mehrere Ausführungsbeispiele der Erfindung sind im Folgenden mit weiteren Einzelheiten näher erläutert. Die schematische Zeichnung zeigt in:
- Fig. 1: in raumbildlicher Explosionsdarstellung ein hydraulisch dämpfendes Gummi-Metalllager für Radaufhängungen von Kraftfahrzeugen, in dessen Flüssigkeitskammern Anschlagkörper integriert sind, die mit sphärischen Kontaktflächen mit sphärischen Kontaktflächen des Lagerkernes zusammenwirken;
- Fig. 2: das Gummi-Metalllager in einem Längsschnitt entlang der Linie II - II der Fig. 1;
- Fig. 3: eine nur teilweise Darstellung des Lagerkernes und des Anschlag- körpers mit einer elastischen Zwischenlage zur Lagerhalbschale, die kreissymmetrisch und parallel zur Längsmittelachse des Lagerkernes ausgeführt ist;
- Fig. 4: eine alternative Ausführung der Zwischenlage gemäß Fig. 3 mit V- förmigen Schrägflächen;
- Fig. 5: eine weitere, alternative Ausführung der Zwischenlage nach Fig. 4, bei der die Schrägflächen in einen parallel zur Längsmittelachse des Lagerkernes übergehenden Mittelabschnitt der Zwischenlage über- gehen; und
- Fig. 6: eine noch weitere, alternative Ausgestaltung der Zwischenlage mit sphärischen Anlageflächen zu den Anschlagkörpern und Lagerhalb- schalen des Gummi-Metalllagers.

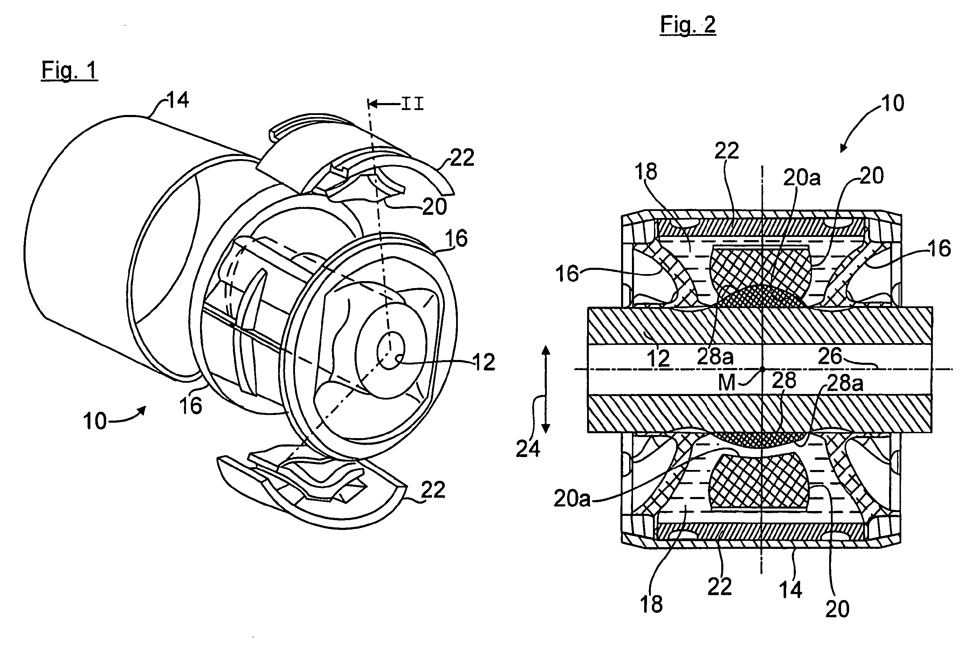

In den Fig. 1 und 2 ist ein Gummi-Metalllager 10 dargestellt, das sich im Wesentlichen zusammensetzt aus einem hülsenförmigen Lagerkern 12, einer rotationssymmetrischen Außenhülse 14 und membranartigen Elastomerkörpern 16 mit diametral gegenüberliegenden Trennwänden 17, die zwischen sich zwei diametral gegenüberliegende Flüssigkeitskammem 18 (Fig. 2) einschließen. Die mit Hydraulikflüssigkeit befüllten Flüssigkeitskammern 18 sind über nicht näher dargestellte Überströmkanäle in bekannter Weise zur Erzielung einer Dämpfungswirkung miteinander verbunden.

In die beiden Flüssigkeitskammern 18 sind Anschlagkörper 20 integriert, die an Lagerhalbschalen 22 angeformt sind. Die Lagerhalbschalen 22 sind fest in die metallische Außenhülse 14 eingesetzt.

Das Gummi-Metalllager 10 ist für eine Anordnung in einem Lenker einer Radaufhängung für Kraftfahrzeuges konzipiert, wobei die Außenhülse 14 in ein Auge des Lenkers eingesetzt ist, während der Lagerkem 12 mittels einer diesen durchdringenden Befestigungsschraube mit einer aufbauseitigen Lagerkonsole verschraubt ist. Die Hauptbelastungsrichtung (Doppelpfeil 24) des Lagers 10 verläuft quer zur Längsmittelachse 26 des Lagerkernes 12, die im Einbauzustand in der Radaufhängung in Z-Richtung (vertikal) ausgerichtet ist. Das Gummi-Metalllager 10 ist nur soweit beschrieben, als dies für das Verständnis der vorliegenden Erfindung erforderlich ist.

Die Anschlagkörper 20 sind in den Flüssigkeitskammern 18 derart diametral gegenüberliegend positioniert, dass sie wie aus Fig. 2 ersichtlich ist in der Hauptbelastungsrichtung 24 bei Zug- oder Druckbelastung des Lenkers der Radaufhängung mit dem Lagerkern 12 zusammenwirken.

Dazu sind an dem Lagerkern 12 in dessen Mittelabschnitt zwei Pufferelemente 28 befestigt, die den Anschlagkörpern 20 zugewandte, sphärische Kontaktflächen 28a aufweisen bzw. einen Kugelabschnitt bilden. Die Anschlagkörper 20 und die Pufferelemente 28 sind aus plastischem Kunststoff mit einem günstigen, niedrigen Reibungskoeffizienten hergestellt.

Die Pufferelemente 28 bzw. deren sphärische Kontaktflächen 28a stützen sich im Belastungsfalle an sphärischen Kontaktflächen 20a der Anschlagkörper 20 über die Lagerhalbschalen 22 an der Außenhülse 14 ab. Die Krümmungsradien der Kontaktflächen 20a, 28a sind im Wesentlichen gleich ausgeführt, wobei deren Zentrum in dem eingezeichneten Lagermittelpunkt M liegt.

Daraus resultiert, dass bei einer durch die Lenkerbewegungen in der Radaufhängung auftretenden kardanischen Verkippung oder einer rotatorischen Verdrehung (im elastischen Bereich) der Außenhülse 14 relativ zum festen Lagerkern 12 die an den Anschlagkörpern 20 wirkenden Abstützkräfte als Normalkräfte eingeleitet werden, mit einer gleichmäßig flächigen Beaufschlagung der Kontaktflächen 20a, 28a.

In der Darstellung gemäß Fig. 2 stützt sich der obere Anschlagkörper 20 bei einer vorausgesetzten stärkeren Belastung der Außenhülse 14 nach unten an dem oberen Pufferelement 28 des Lagerkernes 12 ab, während der untere Anschlagkörper 20 von dem unteren Pufferelement 28 abgehoben ist. Bei geringeren Belastungen (Normalbetrieb) weisen beide Anschlagkörper 20 einen definierten Abstand zu den Pufferelementen 28 auf, um die eingestellte, relativ weiche Lagerkennung nicht zu beeinträchtigen.

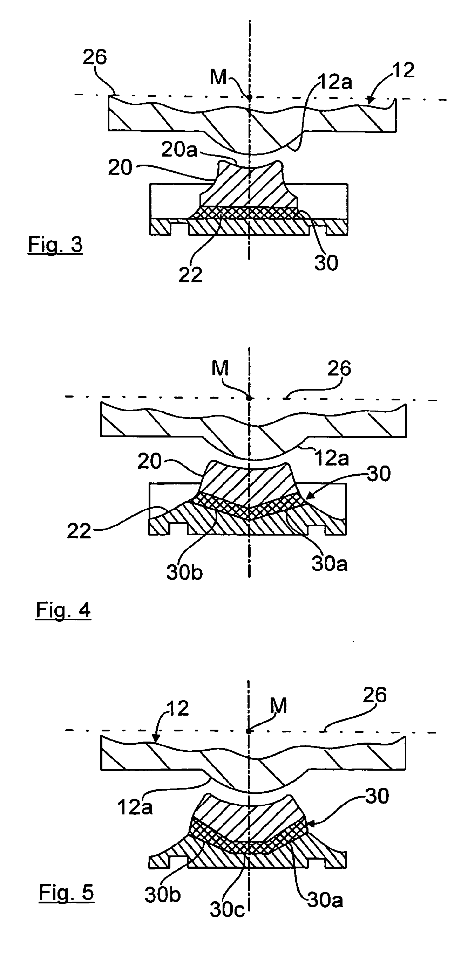

In den Fig. 3 bis 6 sind weitere Ausgestaltungen der Erfindung dargestellt. Funktionell gleiche Teile sind mit gleichen Bezugszeichen versehen. Es sind jeweils nur der Lagerkern 12 teilweise und eine Lagerhalbschale 22 mit Anschlagkörper 20 gezeigt.

Abweichend zu den Fig. 1 und 2 ist gemäß Fig. 3 (und den weiteren Figuren der Zeichnung) der Lagerkern 12 mit einem unmittelbar angeformten Kugelabschnitt bzw. mit sphärischen Kontaktflächen 12a ausgeführt.

Ferner ist zwischen den Anschlagkörpern 20 und den Lagerhalbschalen 22 jeweils eine dämpfende, elastomere Zwischenlage 30 eingesetzt, die kreissymmetrisch um die Längsmittelachse 26 des Lagerkernes 12 und parallel zu dieser ausgeführt ist. Mittels der Zwischenlage 30 wird ein weicheres Einsetzen der Anschlagkörper 20 und eine bei stärkeren Belastungen des GummiMetalllagers 10 noch verbesserte Schwingungsdämpfung erreicht.

Alternativ ist die Zwischenlage 30 gemäß Fig. 4 mit V-förmig ausgerichteten Schrägflächen 30a, 30b mit entsprechenden Gegenflächen der Anschlagkörper 20 und der Lagerhalbschalen 22 ausgeführt. Damit wird insbesondere die Lagerführung und Abstützung von Anschlagkräften in Richtung der Längsmittelachse 26 des Lagerkernes 12 weiter erhöht.

Gemäß Fig. 5 ist die Zwischenlage 30 aufgeteilt in die zwei, etwa V-förmig verlaufenden Schrägflächen 30a, 30b und einen achsparallelen Mittelabschnitt 30c, wodurch etwa vertikal durch den Lagermittelpunkt M verlaufende Kraftkomponenten der Abstützkräfte an den Anschlagkörpern 20 zusätzlich aufnehmbar sind und ggf. zu einer definierten Einstellung der Lagerkennungen beitragen.

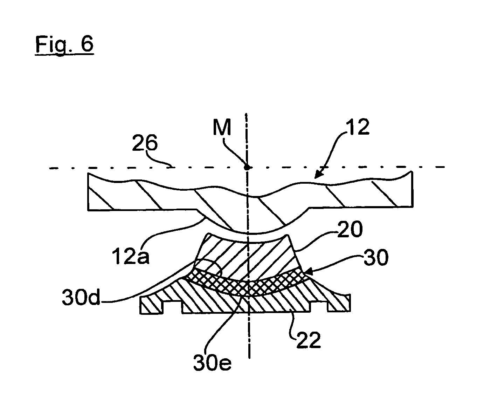

Schließlich ist entsprechend dem Ausführungsbeispiel nach Fig. 6 die zwischen den Anschlagkörper 20 und den Lagerhalbschalen 22 eingesetzte, elastomere Zwischenlage 30 kreissymmetrisch zur Längsmittelachse 26 des Lagerkernes 12 und mit sphärischen Anlageflächen 30d und 30e zu den Anschlagkörpern 20 und den Lagerhalbschalen 22 hergestellt. Das Zentrum der Krümmungsradien liegt dabei wiederum im Lagermittelpunkt M. Dies ermöglicht eine besonders gleichmäßige Einfeitung und Verteilung der wirkenden Abstützkräfte von den Anschlagkörpern 20 auf die Lagerhalbschalen 22.

## Patentansprüche

1. Hydraulisch dämpfendes Gummi-Metalllager, insbesondere für Radaufhängungen von Kraftfahrzeugen, mit einem hülsenförmigen Lagerkern (12), einer rotationssymmetrischen Außenhülse (14), zwischen Lagerkern (12) und Außenhülse (14) angeordneten, membranartigen Elastomerkörpern (16), die zwischen sich diametral gegenüberliegende Flüssigkeitskammern (18) einschließen, die durch Überströmkanäle miteinander kommunizieren, und mit in den Flüssigkeitskammern (18) vorgesehenen Anschlagkörpern (20), die an der Außenhülse (14) abgestützt sind und in der Hauptbelastungsrichtung (24) des Lagers an dem Lagerkern (12) zur Anlage kommen, wobei die Kontaktflächen (20a, 12a, 28a) zwischen dem Lagerkem (12) und den Anschlagkörpern (20) sphärisch ausgebildet sind, wobei die Anschlagkörper (20) an Lagerhalbschalen (22) ausgebildet sind, die diametral gegenüberliegend in die Außenhülse (14) des Lagers (10) eingesetzt sind,
**dadurch gekennzeichnet, dass** zwischen den Anschlagkörpern (20) und den Lagerhalbschalen (22) eine dämpfende Zwischenlage (30) aus elastomerem Werkstoff eingesetzt ist.

2. Gummi-Metalllager nach Anspruch 1, **dadurch gekennzeichnet, dass** die Kontaktflächen (20a) des Anschlagkörpers (20) und des sphärischen Abschnittes (28a, 12a) des Lagerkernes (12) einen einheitlichen Krümmungsradius aufweisen, dessen Zentrum zumindest im wesentlichen im Lagermittelpunkt (M) liegt.

3. Gummi-Metalllager nach Anspruch 1 oder 2, **dadurch gekennzeichnet, dass** die Zwischenlage (30) kreissymmetrisch und parallel zur Mittellängsachse (26) des Lagerkernes (12) ausgebildet ist.

4. Gummi-Metalllager nach Anspruch 1, 2 oder 3, **dadurch gekennzeichnet, dass** die Zwischenlage (30) kreissymmetrisch und mit V-förmig zur Mittellängsachse (26) verlaufenden Schrägflächen (30a, 30b) ausgeführt ist.

5. Gummi-Metalllager nach Anspruch 4, **dadurch gekennzeichnet, dass** die beidseitig verlaufenden Schrägflächen (30a, 30b) der Zwischenlage (30) in einen achsparallel ausgerichteten Mittelabschnitt (30c) übergehen.

6. Gummi-Metalllager nach Anspruch 1, **dadurch gekennzeichnet, dass** die Zwischenlage (30) kreissymmetrisch und mit sphärischen Anlageflächen (30d, 30e) zu den Anschlagkörpern (20) und den Lagerhalbschalen (22) ausgebildet sind.

7. Gummi-Metalllager nach einem oder mehreren der vorhergehenden Ansprüche, **dadurch gekennzeichnet, dass** die sphärischen Kontaktflächen (28a) am Lagerkern (12) an Pufferelementen (28) ausgebildet sind, die diametral gegenüberliegend an Umfangsabschnitten des Lagerkernes (12) befestigt sind.

8. Gummi-Metalllager nach Anspruch 7, **dadurch gekennzeichnet, dass** die Pufferelemente (28) und die Lagerkörper (20) aus plastischem Kunststoff mit niedrigem Reibungskoeffizienten hergestellt sind.

## Claims

1. Hydraulically damping rubber-metal bearing, in particular for wheel suspensions of motor vehicles, having a sleeve-shaped bearing core (12), having a rotationally symmetrical outer sleeve (14), having diaphragm-like elastomer bodies (16) which are arranged between the bearing core (12) and the outer sleeve (14) and which between them enclose diametrically opposite liquid chambers (18) which communicate with one another through overflow ducts, and having stop bodies (20) which are provided in the liquid chambers (18) and which are supported on the outer sleeve (14) and which come into contact with the bearing core (12) in the main loading direction (24) of the bearing, wherein the contact surfaces (20a, 12a, 28a) between the bearing core (12) and the stop bodies (20) are of spherical design, wherein the stop bodies (20) are formed on bearing half-shells (22) which are inserted diametrically oppositely into the outer sleeve (14) of the bearing (10),
**characterized in that** a damping intermediate layer (30) composed of elastomer material is inserted between the stop bodies (20) and the bearing half-shells (22).

2. Rubber-metal bearing according to Claim 1, **characterized in that** the contact surfaces (20a) of the stop body (20) and of the spherical portion (28a, 12a) of the bearing core (12) have a uniform radius of curvature, the centre of which lies at least substantially at the bearing centre point (M).

3. Rubber-metal bearing according to Claim 1 or 2, **characterized in that** the intermediate layer (30) is circularly symmetrical and formed parallel to the central longitudinal axis (26) of the bearing core (12).

4. Rubber-metal bearing according to Claim 1, 2 or 3, **characterized in that** the intermediate layer (30) is circularly symmetrical and formed with oblique surfaces (30a, 30b) which run in a V-shape with respect to the central longitudinal axis (26).

5. Rubber-metal bearing according to Claim 4, **characterized in that** the oblique surfaces (30a, 30b) running at both sides of the intermediate layer (30) merge into a central portion (30c) aligned parallel to the axis.

6. Rubber-metal bearing according to Claim 1, **characterized in that** the intermediate layer (30) is circularly symmetrical and formed with spherical contact surfaces (30d, 30e) to the stop bodies (20) and to the bearing half-shells (22).

7. Rubber-metal bearing according to one or more of the preceding claims, **characterized in that** the spherical contact surfaces (28a) on the bearing core (12) are formed on buffer elements (28) which are fastened diametrically oppositely to circumferential portions of the bearing core (12).

8. Rubber-metal bearing according to Claim 7, **characterized in that** the buffer elements (28) and the bearing bodies (20) are produced from plastic synthetic material with a low coefficient of friction.

## Revendications

1. Palier en caoutchouc-métal à amortissement hydraulique, en particulier pour des suspensions de roue de véhicules automobiles, comprenant un noyau de palier (12) en forme de douille, une douille extérieure (14) à symétrie de révolution, des corps élastomères (16) de type membranaires disposés entre le noyau de palier (12) et la douille extérieure (14), lesquels forment entre eux des chambres de liquide (18) diamétralement opposées, qui communiquent les unes avec les autres par des canaux de débordement, et comprenant des corps de butée (20) prévus dans les chambres de liquide (18), lesquels sont supportés sur la douille extérieure (14) et viennent en appui dans la direction de sollicitation principale (24) du palier sur le noyau de palier (12), les surfaces de contact (20a, 12a, 28a) entre le noyau de palier (12) et les corps de butée (20) étant réalisées sous forme sphérique, les corps de butée (20) étant réalisés sur des demi-coques de palier (22), qui sont insérées de façon diamétralement opposée dans la douille extérieure (14) du palier (10),
**caractérisé en ce qu'**entre les corps de butée (20) et les demi-coques de palier (22) est insérée une couche intermédiaire amortissante (30) en un matériau élastomère.

2. Palier en caoutchouc-métal selon la revendication 1, **caractérisé en ce que** les surfaces de contact (20a) du corps de butée (20) et de la portion sphérique (28a, 12a) du noyau de palier (12) présentent un rayon de courbure unitaire dont le centre se situe au moins essentiellement au centre du palier (M).

3. Palier en caoutchouc-métal selon la revendication 1 ou 2, **caractérisé en ce que** la couche intermédiaire (30) est réalisée avec une symétrie circulaire et parallèlement à l'axe médian longitudinal (26) du noyau de palier (12).

4. Palier en caoutchouc-métal selon la revendication 1, 2 ou 3, **caractérisé en ce que** la couche intermédiaire (30) est réalisée avec une symétrie circulaire et avec des surfaces obliques (30a, 30b) s'étendant en forme de V par rapport à l'axe médian longitudinal (26).

5. Palier en caoutchouc-métal selon la revendication 4, **caractérisé en ce que** les surfaces obliques (30a, 30b) s'étendant des deux côtés de la couche intermédiaire (30) se prolongent par une portion centrale (30c) orientée de manière parallèle à l'axe.

6. Palier en caoutchouc-métal selon la revendication 1, **caractérisé en ce que** la couche intermédiaire (30) est réalisée avec une symétrie circulaire et avec des surfaces d'appui sphériques (30d, 30e) contre les corps de butée (20) et les demi-coques de palier (22).

7. Palier en caoutchouc-métal selon l'une quelconque ou plusieurs des revendications précédentes, **caractérisé en ce que** les surfaces de contact sphériques (28a) sont réalisées sur le noyau de palier (12) au niveau d'éléments tampon (28), qui sont fixés de manière diamétralement opposée sur des portions périphériques du noyau de palier (12).

8. Palier en caoutchouc-métal selon la revendication 7, **caractérisé en ce que** les éléments tampon (28) et les corps de palier (20) sont fabriqués en matière synthétique plastique avec un faible coefficient de friction.
